# FASCICULE DE BREVET EUROPEEN

(11) **EP 0 673 041 B1**
(45) Date de publication et mention de la délivrance du brevet: **24.02.1999**
(21) Numéro de dépôt: 95400542.7
(22) Date de dépôt: 14.03.1995
(51) Int. Cl.: G21F 9/30, B08B 9/30

(54) **Unité et procédé de décontamination de récipients contenant du liquide radioactif**
Arbeitseinheit und Vorrichtung zur Dekontamination von radioaktiver Flüssigkeit enthaltenden Behälter
Unit and process for decontaminating receptacles containing radioactive liquid

(30) Priorité: 16.03.1994 FR 9403055
(43) Date de publication de la demande: 20.09.1995
(73) Titulaire: COMPAGNIE GENERALE DES MATIERES NUCLEAIRES, F-78140 Velizy Villacoublay (FR)
(72) Inventeur: Besnier, Joseph, F-50440 Acqueville (FR)
(74) Mandataire: Ilgart, Jean-Christophe

(56) Documents cités:
- DE-A- 3 143 078
- DE-A- 3 509 839
- DE-A- 3 520 411
- US-A- 4 324 264

## Description

L'invention ressortit à une unité et à un procédé de décontamination de récipients contenant du liquide radioactif.

Elle peut être employée dans une installation d'analyse de liquides radioactifs dans laquelle des échantillons sont versés dans des récipients, appelés cruchons-curseurs par la déposante, qui sont transférés par des tuyaux d'un réseau de transfert pneumatique d'une unité blindée à une autre. La dernière destination des récipients est une unité dans laquelle ils sont vidés de leur contenu résiduel puis décontaminés. Dans une installation existante, les récipients sont accumulés jusqu'à ce qu'un lot suffisamment important soit réuni, puis, après avoir été vidés et éventuellement broyés, ils sont jetés ensemble dans un réservoir de décontamination rempli de liquide de lavage où on les laisse pendant plusieurs heures, et enfin ils sont récupérés et emmagasinés. Dans ces conditions et malgré la durée du séjour dans le réservoir, on constate que la décontamination n'est pas excellente et que les récipients doivent être, d'après les normes actuelles, enterrés à grande profondeur dans une installation spécialisée et noyés dans des fûts de bitume, de béton ou de verre, ce qui est coûteux, occupe beaucoup de volume et risque de devenir inadmissible si des exigences plus grandes de qualité de retraitement apparaissent. Les documents DE 31 43 078 et DE-A-3 509 839 décrivent d'autres installations de ce genre.

Le but ultime de l'invention est d'améliorer les caractéristiques de retraitement des récipients usés, ce qui, d'après les conclusions de l'inventeur, nécessite que la décontamination soit menée rapidement après le remplissage du récipient par le liquide à prélever et analyser, par exemple une heure après, ce qui est possible dans de nombreux cas en effectuant rapidement les prélèvements et les mesures. En effet, il a été trouvé que l'adsorption ou l'incrustation des solutés contaminants du liquide sur la paroi en plastique du récipient n'était pas menée à son terme après ce bref délai, alors qu'elle semble irréversible au bout d'un jour ou deux, ce qui est un temps d'attente fréquent avec l'installation actuelle. Le bénéfice obtenu avec une décontamination précoce est une faible contamination résiduelle des récipients qui autorise à les emmagasiner, à beaucoup moindre coût avec moins de contraintes, dans des installations de surface.

De plus, on a trouvé que le broyage des récipients, s'il était mené après leur vidange mais avant la décontamination afin de leur faire occuper moins de place dans les cuves et dans les fûts d'emmagasinage, n'était pas avantageux car le broyage des récipients pollués accroissait la surface d'incrustation et donc les possibilités de contamination irréversible. En conséquence, on préconise d'après l'invention de décontaminer avant le broyage en lavant soigneusement les récipients, ce qui est rendu possible sans cependant utiliser beaucoup de liquide de lavage, par exemple moins de 100 à 200 ml par récipient, si les récipients sont traités un à un avec des appareils convenables. Le broyage est entrepris sur des récipients décontaminés et permet de réduire leur volume dans les fûts ou les poubelles sans effet induit néfaste.

L'unité de décontamination proposée ici comprend sous sa forme la plus générale les moyens de la revendication 1, dont le préambule correspond à l'installation existante décrite ci-dessus.

Chaque récipient parvenant donc à l'unité est traité aussi vite que possible. Si plusieurs récipients arrivent à peu près ensemble, ils sont mis en file d'attente mais, malgré cela, traités assez rapidement. L'unité contient donc un moyen de régulariser le flux des récipients à l'entrée de l'unité. Ce moyen de mise en file d'attente consiste avantageusement en un carrousel tournant muni d'alvéoles de réception des récipients. Les moyens de rinçage et de séchage des récipients se composent avantageusement d'un moyen responsable de l'intérieur des cruchons constituant le corps principal des récipients, d'un moyen responsable de l'extérieur des cruchons et d'un moyen responsable de l'intérieur des bouchons des récipients, qui servent à fermer les cruchons.

Le procédé de décontamination correspondant est conforme à la revendication 14. Avantageusement, les récipients sont broyés après avoir été lavés. On peut encore les trier avant le broyage en fonction de leur contamination résiduelle. A noter que les documents DE-3520411 A et US-4324264 A décrivent des installations où des bouteilles ordinaires, n'ayant pas contenu de matières radioactives, sont lavées et séchées successivement.

L'invention va maintenant être décrite de manière concrète à l'aide des figures suivantes annexées à titre illustratif et non limitatif :
- la figure 1 est une vue d'ensemble de l'unité,
- la figure 2 est une représentation d'un descendeur pour introduire les récipients dans l'unité de décontamination,
- les figures 3 et 4 sont des vues de dessus et en coupe verticale et diamétrale d'un carrousel attenant au descenseur pour régler le flux de récipients en créant une file d'attente,
- les figures 5 et 6 sont des vues de côté et de dessus d'un bras de préhension,
- les figures 7 et 8 sont deux vues partielles d'une dévisseuse, dans sa version la plus sophistiquée,
- les figures 9 et 10 sont une vue complète et une vue fragmentaire d'un appareil de lavage de bouchons fermant les récipients,
- la figure 11 est une vue d'un appareil de vidage et de lavage de l'intérieur des récipients,
- les figures 12 et 13 sont une vue complète et une coupe selon la ligne XIII-XIII de la figure 12 d'un appareil de lavage de l'extérieur des récipients,
- la figure 14 est une vue de dessus d'une réalisation préférée de l'unité de décontamination,
- et la figure 15 est une vue en perspective des moyens de mise au rebut des récipients.

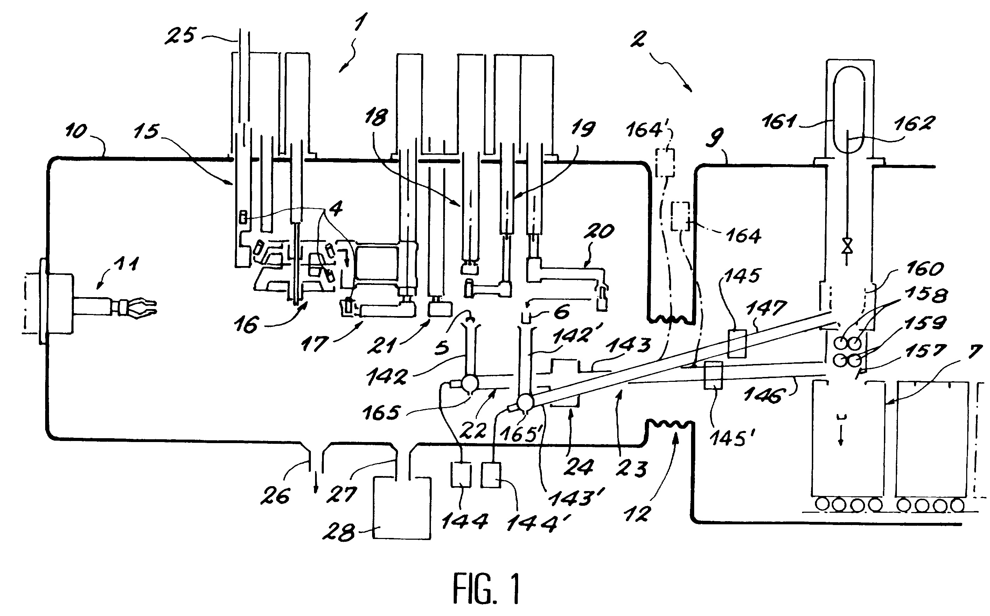

On se reporte tout d'abord à la figure 1. L'unité de décontamination est située pour l'essentiel dans une première enceinte blindée 1, dont la paroi de protection contre les radiations prend la forme d'une première boîte 10 munie d'évidements traversés par des pinces 11 manoeuvrées de l'extérieur pour permettre des manipulations et d'un orifice de sortie entouré par un soufflet 12 qui s'étend jusqu'à un orifice d'entrée d'une autre enceinte blindée, ou première enceinte de rebut 2 destinée aux dernières étapes de traitement des objets subissant la décontamination, à savoir des étapes de mise au rebut succédant à la décontamination elle-même. La première enceinte de rebut 2 est délimitée par une deuxième boîte 9 étanche aux radiations, mais qui peut être moins épaisse que la précédente puisqu'elle ne reçoit que les récipients décontaminés.

Les appareils présents dans la première boîte 10 et qui jouent un rôle dans la décontamination sont essentiellement, dans l'ordre des étapes du procédé, un descenseur d'entrée 15, un carrousel d'attente 16, un bras de préhension 17, un dévisseuse 18, un laveur de bouchons 19, un premier laveur de cruchon 20, un second laveur de cruchons 21, un réseau d'évacuation des bouchons 22, et un réseau d'évacuation de cruchons 23. Un compteur de radioactivité 24 est situé devant des portions des réseaux d'évacuation 22 et 23, et la première boîte 10 communique encore avec un conduit d'introduction 25 des récipients, un collecteur de recyclage pour le liquide contaminé 26 et un collecteur d'effluents 27 terminé par un réservoir 28.

Les laveurs 19, 20 et 21 comprennent des bras tournants pour aller chercher les bouchons et les cruchons, les apporter à certains endroits et les déposer. Le carrousel d'attente 16 et le bras de préhension 17 tournent aussi pour les mêmes raisons. De plus, la dévisseuse 18 comprend des pièces tournant autour d'un axe. Les cruchons et les bouchons passent donc d'un dispositif à l'autre dans la première boîte 10, sans aucune manipulation par les pinces 11, qui ne servent que pour l'entretien ou en cas d'imprévu. Les dispositifs de la première boîte 10 sont commandés de l'extérieur, par un ordinateur ou automate mettant en marche leurs moteurs et programmé pour garder la trace de tous les récipients qui entrent dans la première boîte 10 et les faire avancer le long de la chaîne de décontamination aussi vite que possible. Les moteurs sont situés hors de la première boîte 10 et se terminent par des transmissions qui s'étendent jusqu'aux parties mobiles des dispositifs qu'elles entraînent en passant par des manches, ou de préférence par des axes à joints multiples assurant une parfaite étanchéité entre l'intérieur et l'extérieur, qui traversent la paroi de la première boîte 10. Chacun de ces appareillages sera décrit en détail plus loin, et on constatera que la disposition retenue permet de reporter tous les équipements sensibles hors de la première boîte 10, en n'y laissant que des éléments robustes qu'on espère ne jamais devoir réparer. Il est clair que les manipulations par les pinces 11 sont délicates et par conséquent inefficaces pour des organes sensibles tels que capteurs et actionneurs.

On va maintenant décrire les dispositifs de la première boîte 10 en délaissant pour l'instant la figure 1. Certains sont décrits dans d'autres demandes de brevet de la déposante, de sorte qu'ils ne font pas partie de l'invention par eux-mêmes mais seulement par leur contribution au procédé global. Ils ne seront alors pas forcément décrits dans tous leurs détails.

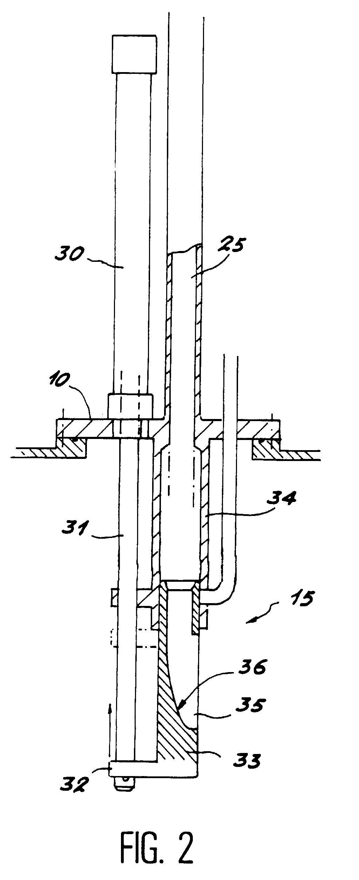

Le descenseur d'entrée 15 est décrit à la figure 2. Il est situé au bout du conduit d'introduction 25, qui appartient à un réseau de transfert pneumatique de récipients d'un genre connu. Sa partie essentielle est un équipage mobile animé par un vérin 30 fixé à l'extérieur de la première boîte 10, et que la tige 31 du vérin 30 traverse. La tige 31 est terminée par une console 32 porteuse d'une bague 33, qui coulisse selon les mouvements de la tige 31 dans un fourreau 34 fixé au conduit d'introduction 25 et qui le prolonge. La bague 33 est évidée et ouverte par une fente latérale 35 qui donne dans la première boîte 10 dans la position représentée, ce qui permet d'y introduire les récipients, mais qui est masquée par le fourreau 34 quand la tige 33 est rétractée, ce qui est fait dès que l'introduction d'un récipient est menée à terme afin que les vapeurs polluantes de la première boîte 10 n'entrent pas dans le réseau de transfert pneumatique. On remarque que l'éjection des récipients est facilitée par un arrondi 36 de la bague 33 qui projette les récipients vers la fente latérale 35.

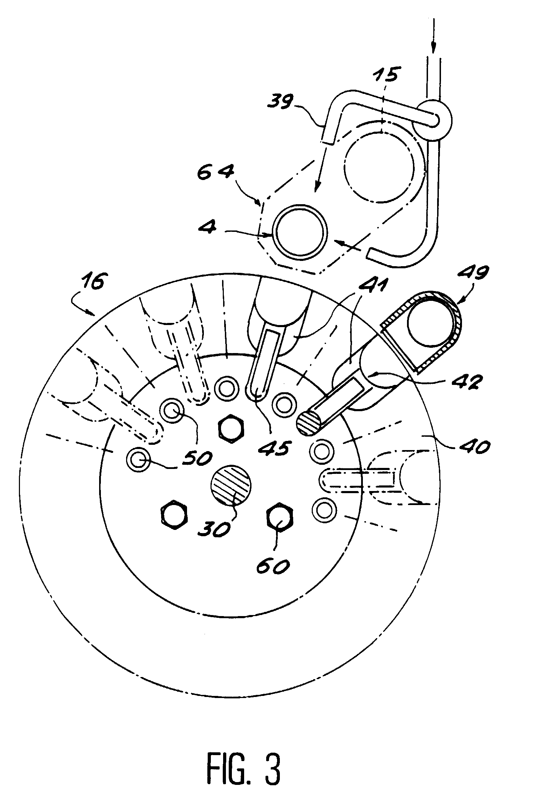

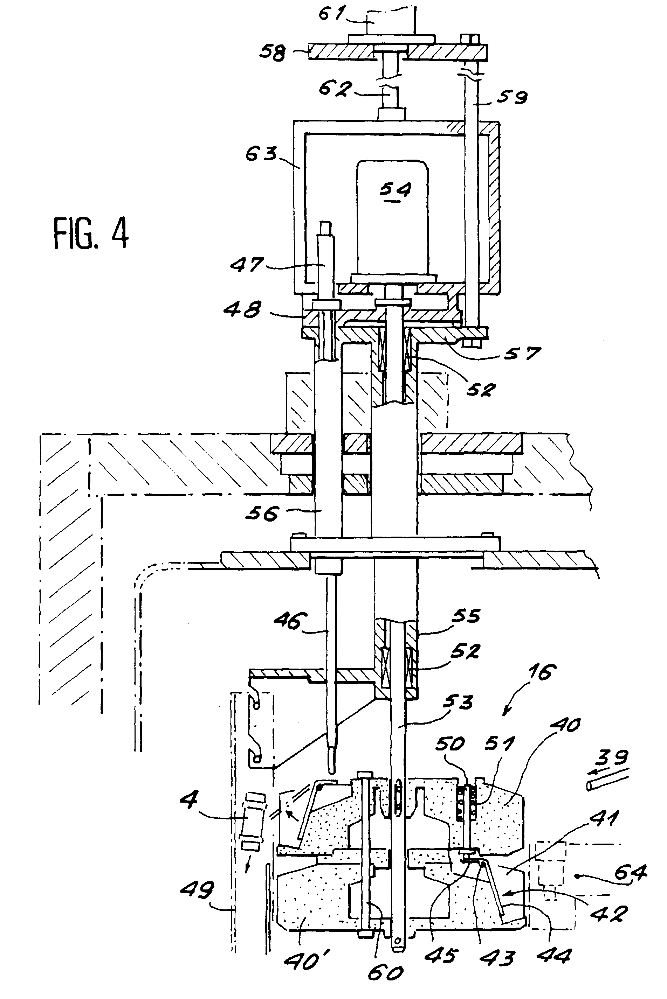

On passe maintenant aux figures 3 et 4 pour un bref commentaire du carrousel d'attente 16, auquel les récipients parviennent après avoir quitté le descenseur d'entrée 15. Cet appareil est analogue à celui qui est décrit plus complètement dans la demande EP-A-0 639 775. Il est essentiellement formé d'au moins un râtelier et avantageusement de deux râteliers 40 et 40' unis par des vis 60, superposés et suspendus à un arbre 53. Chacun des râteliers 40 et 40' est circulaire et creusé d'alvéoles 41 à sa périphérie, dont chacun est garni d'un poussoir 42 en forme de levier coudé articulé en son centre 43 et qui se compose d'un bras éjecteur 44 et d'un bras de commande 45. Le basculement des poussoirs 42 est commandé par un doigt 46 unique, constituant la tige d'un vérin 47 dont le corps est vissé à une plate-forme 48 hors de la première boîte 10. Quand le doigt 46 est avancé, il pousse l'extrémité du bras de commande 45 et projette ainsi le bras éjecteur 44 vers l'extérieur de l'alvéole 41 concerné pour le vider de son contenu dans une goulotte 49. Quand le doigt 46 est relâché, le bras éjecteur 42 retombe au fond de l'alvéole 41.

La superposition des râteliers 40 et 40' permet d'emmagasiner un plus grand nombre d'objets, mais soulève quelques problèmes de fonctionnement qui sont résolus comme voici. Des pistons 50 sont établis à travers le râtelier supérieur 40 et leurs faces inférieures touchent presque les bras de commande 45 des poussoirs 42, qui leur sont respectivement associés, du râtelier inférieur 40', de sorte que le doigt 46, dont la course est immuable, frappe les poussoirs 42 du râtelier supérieur 40 directement et ceux du râtelier inférieur 40' par l'intermédiaire des pistons 50 pour exercer la commande voulue. Des ressorts 51 logés dans des alésages du râtelier supérieur 40 repoussent au repos les pistons 50 vers le haut pour garantir que les poussoirs 42 du râtelier inférieur 40' retombent au fond des alvéoles 41 quand les pistons 50 sont relâchés.

L'arbre 53 auquel les râteliers 40 et 40' sont suspendus tourne sous l'action d'un moteur 54, associé ou non à un codeur mécanique, vissé à la plate-forme 48. Un manchon 55 est solidaire de la première boîte 10 et entoure la plus grande partie de la longueur de l'arbre 53 pour le protéger et le soutenir grâce à une paire de paliers lisses 52. Un autre manchon 56 de disposition analogue existe autour du doigt 46. Les deux manchons 55 et 56 sont unis par une plaque de soubassement 57, elle-même reliée à une plaque supérieure 58 par des colonnettes verticales 59. Un vérin 61 a le corps vissé à la plaque supérieure 58, et à sa tige 62 est accrochée une nacelle 63 solidaire de la plate-forme 48. Cette disposition permet d'abaisser et de soulever à volonté la plate-forme 48, le vérin 47 et le carrousel mobile 16 par le vérin 61 afin de placer chacun des râteliers 40 et 40' tour à tour à hauteur du descenseur d'entrée 15 et de l'orifice de la goulotte 49, qui, suspendue au manchon 55, reste immobile dans la première boîte 10.

Au sortir du descenseur d'entrée 15, les récipients 4 tombent sur un peson 64 fixe, on place un alvéole 41 vide de l'un des deux râteliers 40 et 40', selon l'état du vérin 61, en face du peson 64, et un jet d'air originaire de buses 39 projette le récipient 4 dans l'alvéole 41.

L'intérêt d'un carrousel mobile 16 dans cette application provient de ce qu'il est nécessaire de décontaminer les récipients 4 devenus inutiles aussi vite que possible, et que les appareils prévus pour cela et dont la description vient sont prévus pour des décontaminations individuelles des récipients 4, qu'ils peuvent accomplir rapidement et à tout moment. Mais l'unité de décontamination ne " décide " cependant pas du rythme d'arrivée des récipients 4 et de ses inévitables irrégularités, ne serait-ce qu'en fonction des horaires de travail. Il faut régulariser leur flux d'arrivée. Le carrousel tournant 16 sert donc de support à une file d'attente de récipients 4, qu'il recevra dans les alvéoles 41 et déchargera à leur tour dans la goulotte 49 dès que les autres appareils seront libérés. Le programme de commande automatique de l'unité de décontamination, qui entraîne tous les appareils des boîtes 1 et 2 et les coordonne, est conçu pour retenir quels alvéoles portent les récipients arrivés en premier. Comme la décontamination est menée rapidement, les temps d'attente sont très réduits, ce qui ne compromet pas la qualité du résultat final.

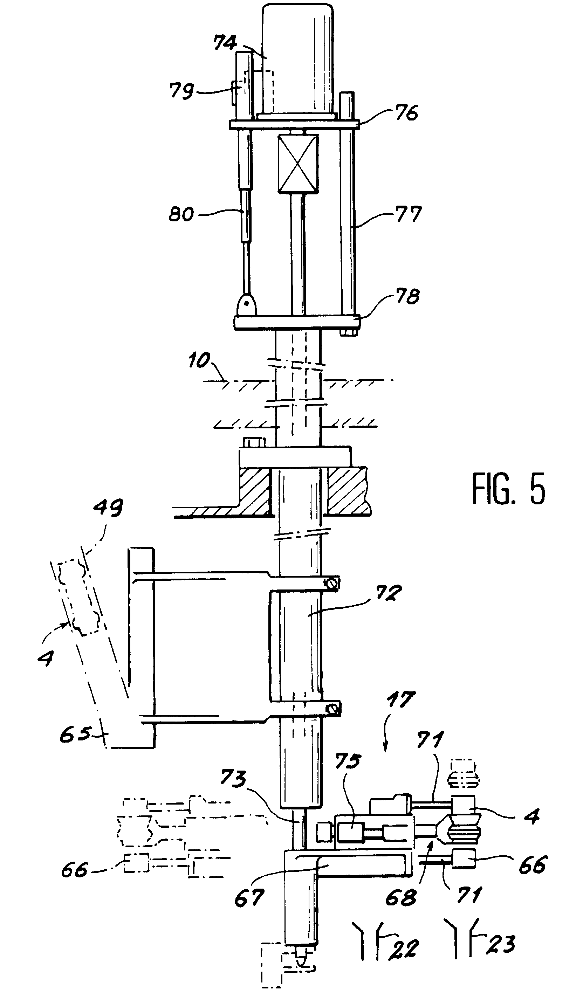

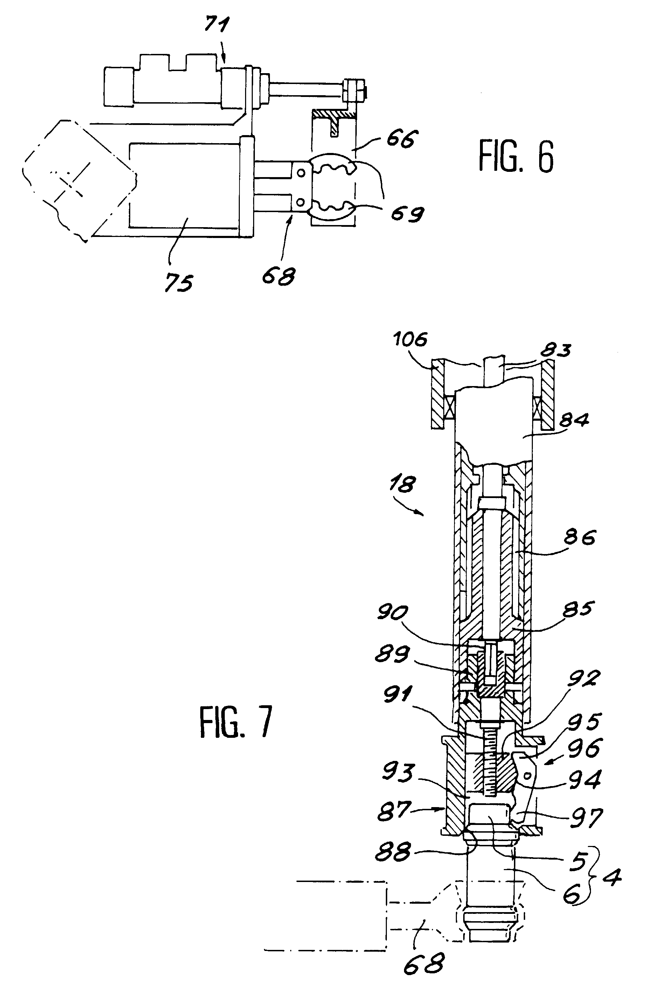

On passe maintenant aux figures 5 et 6 où l'illustration du bras de préhension 17 est faite. Un tel appareil est déjà décrit, avec une dévisseuse 18 et un moyen de prélèvement de liquide, dans une autre demande de brevet EP-A-0 649 149 de la société déposante et sera décrit plus succinctement ici. Au sortir de la goulotte 49, les récipients 4 tombent dans un conduit de guidage 65 puis sur un fond 66 situé au bout d'un tronçon tournant 67 du bras de préhension 17. De plus, une pince 68 est fixée au tronçon tournant et ses mâchoires 69, qui s'étendent un peu au-dessus du fond 66, peuvent venir se refermer autour du récipient 4 qui vient de choir. Dans la situation représentée, le fond 66 est toutefois éloigné de la goulotte 49 car le bras de préhension 17 a tourné, mais à ce moment-là il s'étend sous le conduit de guidage 65.

Le fond 66 est relié au bras de préhension 17 par des tiges d'un vérin 71 qui permettent de l'escamoter. Si alors la pince 68 s'ouvre, le récipient 4 précédemment tenu est lâché et tombe plus bas. C'est ce qu'on fait au-dessus de la trémie d'entrée du réseau d'évacuation des cruchons 23 après les opérations qu'on va bientôt décrire.

Le conduit de guidage 65 est soutenu par un manchon 72 qui s'étend à travers la première boîte 10 et qui abrite un axe 73 qui sert à mouvoir le bras tournant 67, grâce à un moteur 74, équipé ou non d'un codeur, situé hors de la première boîte 10. Les liaisons de commande du vérin 71 et d'un vérin 75 d'ouverture de la pince 68 sont assurées par des fils non représentés qui s'étendent sur toute la longueur du manchon 72 et aboutissent à des moyens de commande extérieurs. On pourrait aussi remplacer les vérins 71 et 75 par des éléments mécaniques statiques, à ressort par exemple, dont les mouvements seraient commandés par des moteurs extérieurs et par des transmissions à câble, tendues à travers le manchon 72.

Le bras tournant 67 doit aussi être mobile verticalement pour placer le récipient 4 sur ou sous les appareils suivants en les touchant. Pour cela l'axe 73 coulisse. Le moteur 74 dont il dépend est assujetti à une plate-forme 76 qui coulisse sur des colonnettes verticales 77 liées à une bride 78 de liaison au manchon 72. Un vérin 79 a le corps assujetti à la plate-forme 76 et le bout de la tige 80 fixé à la bride 78. Il accomplit donc le mouvement souhaité en élevant et abaissant la plate-forme 76.

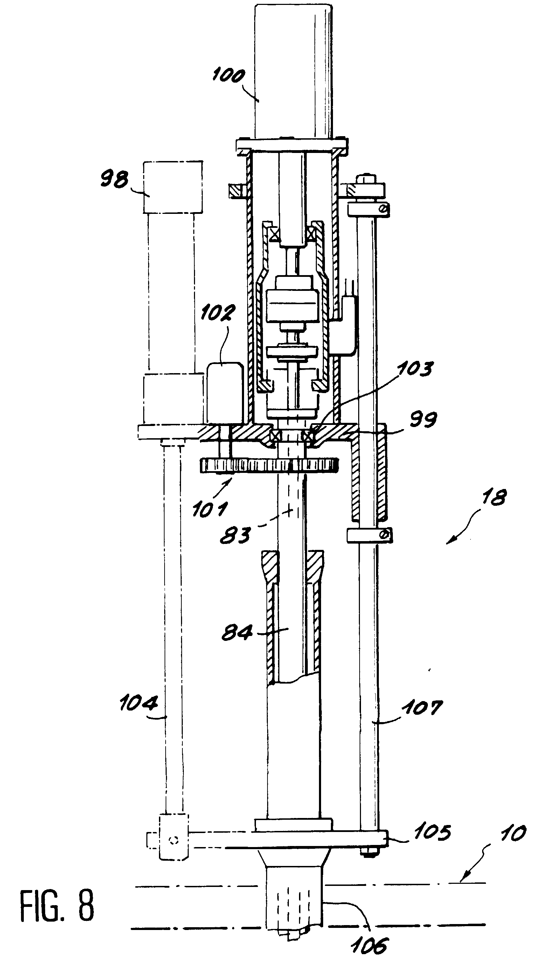

La dévisseuse 18, illustrée aux figures 7 et 8, ne comprend pas de bras tournant, mais l'axe 83, qui la commande en coulissant verticalement dans un manchon 84 sous l'action d'un système à vérin analogue à celui du carrousel mobile 16, porte à son extrémité un embout 85 retenu en rotation au moyen de clavettes 86 qui s'imbriquent dans des cannelures correspondantes établies à l'intérieur de l'extrémité du manchon 84. L'embout 85 est prolongé vers le bas par un capuchon 87 sensiblement tubulaire mais dont l'alésage est terminé par une portée conique interne 88, s'évasant vers le bas et qui est destinée à recevoir le bouchon 5 du récipient 4 en le coinçant, ce qu'on obtient par un mouvement descendant de l'axe 83 et de l'embout 85 ; le cruchon 6 du récipient 4 s'appuie sur le fond 66 en étant retenu par la pince 68. Si on ajoute au mouvement de coulisse de l'axe 83 un mouvement tournant, l'embout 85, monté à rotation libre sur l'axe 83, ne bouge plus et continue de retenir fermement le bouchon 5 par le capuchon 87, mais une douille 89 retenue dans un logement cylindrique de l'embout 85 est tournée grâce à une extrémité en section carrée 90 de l'axe 83 qui pénètre dans un perçage de même section de la douille 89. Or la douille 89 est terminée par une vis 91. Un écrou 92 est engagé autour de la vis 91 et à l'intérieur de l'alésage du capuchon 87 qui se termine par la portée conique interne 88, et il possède trois arêtes cunéiformes 94 réparties uniformément autour de l'axe 83 et dont une seule est représentée : l'écrou 92 est plus épais à mi-hauteur à l'endroit des arêtes cunéiformes 94. L'alésage et l'écrou 92 n'ont pas une section circulaire : l'écrou 92 est donc immobile en rotation et se déplace verticalement selon les rotations de la vis 91 et de l'axe 83, et les arêtes cunéiformes 94 repoussent en s'élevant des bras de commande 95 d'autant de loquets 96 en forme de leviers coudés dont les autres bras 97 appuient sur le bouchon 5 pour le coincer. Le bouchon 5 est alors dévissé en faisant tourner le manchon 84, et on passe à présent au commentaire de la figure 8 pour décrire les derniers équipements de la dévisseuse 18, qui accomplissent en particulier cette action.

On a représenté par 98 un vérin qui déplace verticalement un socle 99 afin de commander les mouvements de coulisse du manchon 84. Le socle 99 porte en effet un roulement 103 à la bague interne duquel le manchon 84 est suspendu. La rotation du manchon 84, responsable du dévissage du bouchon 5, est accomplie grâce à un engrenage 101 reliant le manchon intermédiaire 84 à un autre moteur 102 fixé au socle 99 qui porte encore un moteur 100 d'entraînement en rotation de l'axe 83. La tige 104 du vérin 98 est unie à une plate-forme 105 solidaire d'un manchon extérieur 106 entourant une partie de la longueur du manchon 84 et qui traverse la paroi de la première boîte 10. Le manchon extérieur 106 est immobile et la plate-forme 105 porte des colonnettes 107 de guidage, autour desquelles le socle 99 coulisse. Quand le dévissage est terminé, la dévisseuse 18 est relevée par un mouvement du vérin 98, emportant le bouchon 5 toujours retenu dans le capuchon 87 et dégageant le cruchon 6, et le bras de préhension 17 est alors mis en mouvement pour apporter le cruchon 6 plus loin, devant les laveurs 20 et 21.

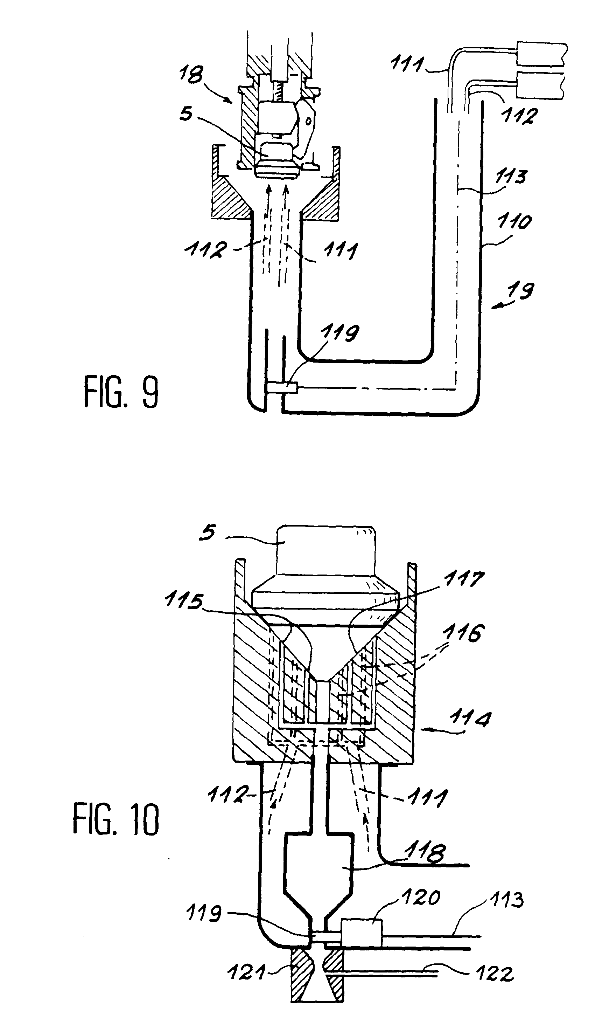

Arrive alors sous la dévisseuse 18 le laveur de bouchons 19, lui aussi situé au bout d'un bras tournant 110. La figure 9 illustre la situation obtenue. L'enveloppe du bras tournant 110 abrite des conduits de projection d'eau 111, des conduits de soufflage d'air 112 et un fil électrique ou un tube pneumatique de commande 113. On trouve une timbale 114 (détaillée à la figure 10) à l'extrémité libre du bras tournant 110 et dans laquelle on fait pénétrer le bouchon 5, qui s'y emboîte presque parfaitement, en abaissant à nouveau la dévisseuse 18. Le conduit de projection d'eau 111 se ramifie dans la timbale 114 pour déboucher dans la surface interne 117 de celle-ci par des buses de projection d'eau 115, orientées pour soumettre la face interne du bouchon 5 à un rinçage complet. De même, le conduit de soufflage d'air 112 se ramifie dans la timbale 114 pour déboucher à sa surface interne 117 en des buses de soufflage d'air 116. L'air sert à sécher le bouchon 5 après le rinçage. L'eau de rinçage chargée des produits contaminants qu'elle a lavés coule le long de la surface interne 117 de la timbale 114 et aboutit à un réservoir 118 établi dans le bras tournant 110. La surface interne 117 est en entonnoir pour permettre cet écoulement. Le bas du réservoir 118 présente une bonde 119 commandée par une électrovanne ou une pneumo-vanne 120 elle-même commandée via le fil 113. Quand le réservoir 118 est plein, on l'amène au-dessus du collecteur d'effluents 27 par une rotation du bras tournant 110 et on ouvre la bonde 119 pour le vider.

En complément ou en variante, on peut utiliser un éjecteur d'air 121, alimenté en air moteur par un tube 122, sous le réservoir 118. L'éjection d'air 121 est réalisée après avoir amené la timbale 114 et son orifice de sortie au-dessus du collecteur d'effluents 27. Son but est d'éviter qu'une surpression ne s'établisse sous le bouchon 5 pendant le séchage et que des gouttelettes contaminées ne s'élèvent dans la timbale 114 en franchissant la bande par laquelle le bouchon 5 s' appuie sur elle. Au lieu de cela, elles sont aspirées et tombent toutes dans le réservoir 118. Si l'éjecteur d'air 121 est combiné à la bande 119, il permet de procéder à un dernier rinçage par lequel la timbale 114 est entièrement remplie, puis vidée. L'éjection d'air pendant la vidange permet de retirer complètement le liquide. Dans cette réalisation, la décontamination est encore beaucoup plus complète.

Le laveur de l'intérieur des bouchons 19 est programmé, de même que les deux autres laveurs 20 et 21, pour n'utiliser que peu de liquide de lavage. Le volume de liquide souillé est donc réduit. Cet avantage provient de la maîtrise totale du processus, de l'absence de volume gaspillé par des projections superflues et de la suppression de la décontamination passive dans des cuves où les bouchons 5 et les cruchons 6 doivent être complètement immergés.

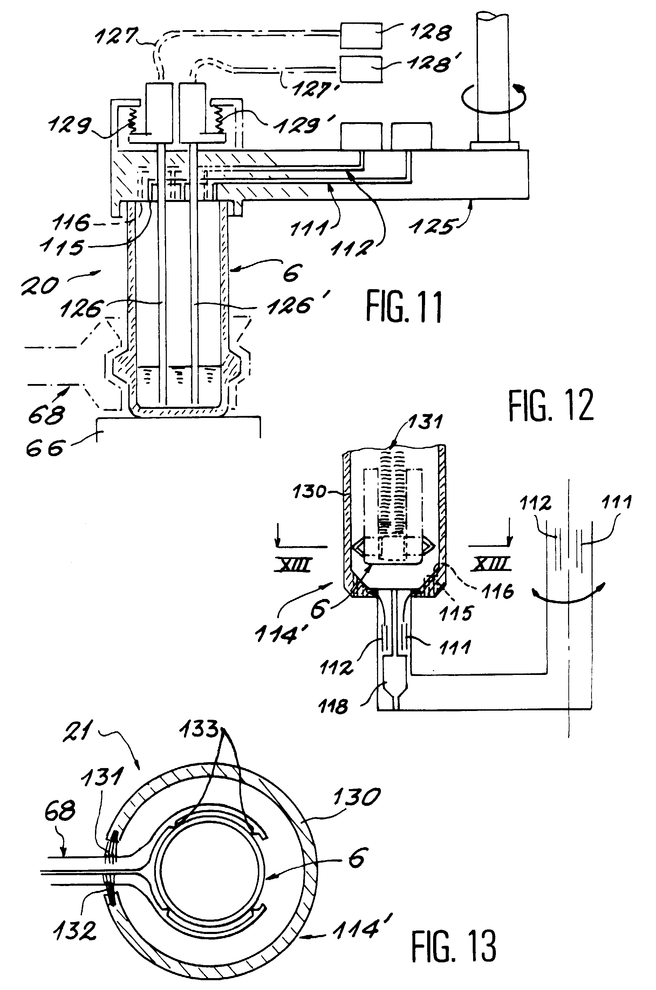

On passe maintenant à la description du laveur de l'intérieur des cruchons 20, qu'on illustre à la figure 11. Le cruchon 6, toujours posé sur le fond 66 amovible, est retenu par la pince 68 et placé au-dessous d'un bras tournant 125 de ce laveur 20. Le cruchon 6 est élevé jusque sous le bras tournant 125. Des buses de projection d'eau 115 et de soufflage d'air 116, raccordées à des conduits d'alimentation 111 et 112 et des réservoirs d'eau et d'air semblables à ceux qui précèdent, débouchent alors dans le cruchon 6. De plus, le bras tournant 125 porte également deux aiguilles 126 et 126' de seringue reliées par des tuyaux souples 127 et 127' à des pompes 128 et 128' situées hors de la première boîte 10. Au moins une des aiguilles 126 et 126' pénètre tout au fond du cruchon 6, et on peut les suspendre au bras tournant 125 par l'intermédiaire de ressorts 129 et 129' qui les abaissent mais permettent qu'elles se soulèvent dès que leur bout touche le fond du cruchon 6.

L'une des aiguilles, telle que 126, est prévue pour l'aspiration du reste d'échantillon contaminé qui emplit le cruchon 6. La pompe 128 est mise en action pour produire cette aspiration. Une petite quantité d'eau de prérinçage est projetée par les buses de projection d'eau 115 sur la paroi du cruchon 6 pour la laver des particules contaminantes qui la recouvrent et des gouttelettes qui pourraient subsister. Une nouvelle aspiration par la pompe 128 permet d'absorber ce liquide également assez pollué par la même aiguille 126. Un rinçage avec une plus grande quantité d'eau est alors entrepris pour laver complètement l'intérieur du cruchon 6, et ce liquide est aspiré à son tour. Comme il est peu pollué, on utilise l'autre aiguille 126' et l'autre pompe 128' pour cela.

Les pompes 128 et 128' peuvent consister en des appareils déjà utilisés ailleurs dans l'installation pour réaliser des prélèvements d'échantillons de liquide. Ici encore, un éjecteur d'air ou un moyen d'aspiration équivalent peut être ajouté pour éviter de créer une surpression, ayant pour conséquence des fuites de liquide contaminé, pendant le rinçage et le séchage.

Après qu'un séchage a été produit dans les mêmes conditions que précédemment dans le cruchon 6, on abaisse et retire le cruchon 6 et on amène les aiguilles 126 et 126' successivement au-dessus du collecteur de recyclage 26 et du collecteur d'effluents 27. Le contenu de la première aiguille 126 est rejeté dans le premier, celui de la deuxième aiguille 126' dans le second. Le collecteur de recyclage 26 est donc destiné à recueillir du liquide très contaminé et se trouve renvoyé vers l'installation de retraitement spécialement isolée de l'extérieur dans laquelle on travaille sur les liquides contaminés et d'où les récipients 4 remplis proviennent, ce qui est cependant facile à réaliser à relativement peu de frais puisque le volume de ce liquide est peu important. On n'a pas besoin de prendre les mêmes précautions avec le réservoir 28, qui recueille les effluents peu pollués et peut donc être construit et placé avec de moindres exigences.

Le cruchon 6 est ensuite apporté au laveur de l'extérieur des cruchons 21, qui comprend comme le laveur de bouchons 19 des conduits 111 et 112 de rinçage et de soufflage, des buses 115 et 116 correspondantes, etc., et une timbale, ici désignée par 114', dans laquelle les buses 115 et 116 débouchent de la même façon. Ce laveur 21 est illustré aux figures 12 et 13. La timbale 114' a simplement, par rapport à la timbale 114, un bord 130 à la fois sensiblement plus haut, pour que tout le cruchon 6 puisse s'y enfoncer, et entaillé d'une rainure verticale 131 occupée par un joint à lamelles 132 pour permettre à la pince 68 d'être descendue à travers la timbale 114'.

La pince 68 équipée de pointeaux 133 sur la face interne de ses mâchoires de manière que l'eau de décontamination nettoie à la fois la totalité de l'extérieur du cruchon 6 et la pince 58 elle-même, évitant ainsi de créer une surface morte entre la pince 68 et le cruchon 6 avec une surface non décontaminée. Le principe de lavage, dans tous les cas, consiste à laver simultanément l'objet à nettoyer, l'intérieur du volume et l'outil de préhension, de manière à éviter l'accumulation ou le dépôt de gouttelettes contaminées.

On procède comme précédemment à un rinçage et à un séchage, cette fois-ci de l'extérieur du cruchon 6, pour le débarrasser des particules contaminantes qu'il aurait pu recueillir pendant ses passages dans le réseau de transfert pneumatique ou ailleurs. Le liquide de rinçage souillé tombe dans un réservoir 118 semblable au précédent et qu'on peut ouvrir de la même manière, ce qu'on fait au-dessus du collecteur d'effluents 27.

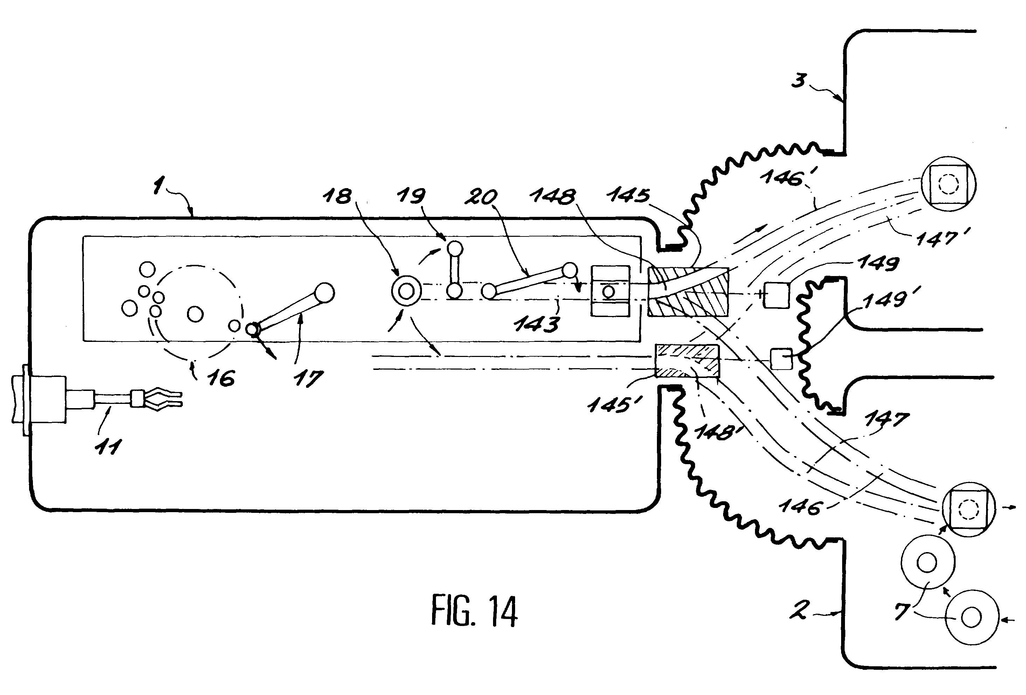

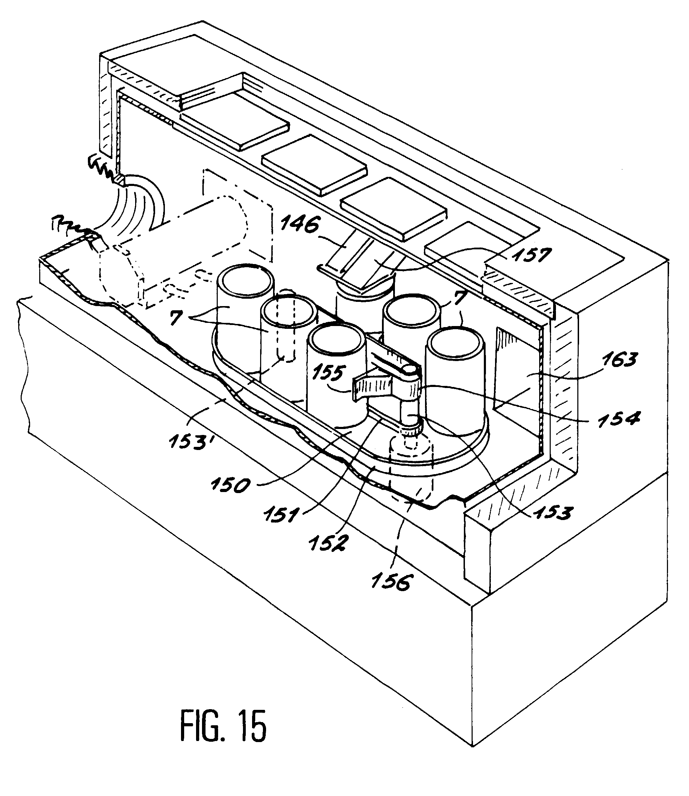

On revient à la figure 1 pour la suite de la description. Il suffit alors de laisser choir le bouchon 5 et le cruchon 6 dans les réseaux d'évacuation 22 et 23 respectifs pour pouvoir traiter un autre récipient 4 en attente sur le carrousel d'attente 16. Les réseaux d'évacuation 22 et 23 commencent en des trémies d'entrée verticales, respectivement 142 et 142', dont la première est située immédiatement au-dessous de la dévisseuse 18 et l'autre au-dessous d'une position accessible par le bras de préhension 17. Il suffit donc d'écarter les loquets 96, d'escamoter le fond 66 et d'ouvrir la pince 68, une fois que le cruchon 6 a été apporté au-dessus de la trémie 142', pour laisser choir respectivement le bouchon 5 et le cruchon 6. Arrivés au fond des trémies 142 et 142', ils commencent l'ascension de conduites pentues, 143 et 143' respectivement, grâce à des poussées d'air comprimé produites par des sources symbolisées par 144 et 144' qui appartiennent au reste du réseau de transfert pneumatique et ne sont donc pas décrites en détail. On pourrait aussi produire le même effet en aspirant de l'air par un appareil placé en aval des conduites pentues 143 et 143'. Le bouchon 5 et le cruchon 6 passent devant le compteur de radioactivité 24, et (on se reportera désormais aussi à la figure 14) les conduites pentues 143 et 143' se ramifient en atteignant un barillet de bifurcation 145 ou 145' en deux conduits, 146 ou 146' et 147 ou 147', dans l'un ou l'autre desquels le bouchon 5 ou le cruchon 6 sont envoyés. En effet, le barillet 145 ou 145' possède un évidement incurvé 148 ou 148' toujours en prolongement du conduit d'entrée 143 ou 143', qui est dans son axe et dont l'autre extrémité vient prolonger l'un ou l'autre des conduits 146 et 146' (ou 147 et 147') sous l'impulsion d'un moteur 149 ou 149' qui tourne le barillet 145 ou 145'. Les bouchons 5 et les cruchons 6 aboutissent donc à l'une ou l'autre de la première enceinte de rebut 2 et d'une seconde enceinte de rebut 3 dont l'une est affectée aux récipients 4 peu contaminés et l'autre aux récipients 4 plus contaminés, dont les contraintes de stockage sont plus sévères. La seconde enceinte de rebut 3 est éventuellement plus fortement blindée que l'autre, mais sinon sa constitution est sensiblement identique. On ne décrira donc que l'enceinte 2, dans laquelle débouchent les conduits 146 et 147, et on se reporte pour cela aux figures 1 et 15. Le premier de ces conduits 146 débouche directement au-dessus d'une poubelle 7 d'une série posée sur une piste 150 de convoyage oblongue et en boucle fermée. La piste 150 est délimitée à ses périmètres intérieur et extérieur par deux bordures 151 et 152. De plus, deux rouleaux 153 et 153' s'élèvent aux deux extrémités de l'espace central qu'entoure la piste 150, et une courroie 154 est tendue entre eux. Elle porte des taquets 155 destinés à faire avancer les poubelles 7. C'est qu'un des rouleaux 153 est mobile sous l'action d'un moteur d'entraînement 156, ce qui fait également tourner la courroie 154. Chacune des poubelles 7 passe donc à tour de rôle au-dessous de l'orifice de sortie du conduit 146 et d'une trémie de décharge 157 elle-même au-dessous de deux paires de rouleaux de broyage.

Le conduit 147 de transport des cruchon 6 de récipients 4 aboutit au-dessus de ces rouleaux de broyage 158 et 159, dans une trémie d'introduction 160, où les cruchons 6 sont déchargés avant de glisser dans les rouleaux de broyage 158 et 159 où ils sont broyés en petits morceaux dont le volume formé dans les poubelles 7 est beaucoup moindre. On préconise soit de déchiqueter les cruchons 6 de plastique par des rouleaux garnis de couteaux soit, mieux, de les fragiliser par cryogénie, à l'aide de gaz carbonique ou d'azote liquide en bouteilles 161 du commerce, devant la trémie d'introduction 160 et de libérer automatiquement un peu de gaz par son embouchure 162 à chaque fois qu'un cruchon 6 passe, pour le refroidir au-dessous de sa température de fragilisation et qu'il se fracasse entre des rouleaux 158 et 159 sensiblement lisses. Le volume est alors beaucoup diminué. Quand la poubelle 7 est pleine, on en place une autre, et une des poubelles 7 déjà pleines arrive devant un sas 163 qu'on ouvre alors pour la sortir et la remplacer par une autre qui arrivera plus tard sous l'orifice du conduit 146 et sous la trémie de décharge 157 après avoir parcouru l'autre côté de la piste 150.

Les conduites pentues 143 et 143' s'élèvent vers les enceintes 2 et 3 afin de pouvoir les laver à l'occasion et notamment si des particules contaminées s'y déposent, car elles peuvent se déplacer vers les enceintes 2 et 3 qui communiquent avec l'extérieur et troublent les mesures du capteur de radioactivité 24. On peut donc disposer des circuits d'arrosage 164 et 164' qui débouchent dans les conduites pentues 143 et 143' en aval du compteur de radioactivité 24 au niveau du soufflet 12 par exemple. L'eau d'arrosage coule vers la première enceinte blindée 1 et quitte les conduites pentues 143 et 143' par un orifice de vidange 165 ou 165' après les avoir rincés. L'eau coule ensuite dans le collecteur d'effluents 27. Il est pour cela utile que le fond de la première boîte 10 soit en entonnoir. Les vapeurs, buées et aérosols peuvent se condenser librement ou être retirées par un circuit de ventilation non représenté. Des joints d'étanchéité sont disposés à tous les orifices de la première boîte 10 pour la rendre étanche.

Enfin, une installation de broyage peut être prévue pour les bouchons mais son intérêt est plus faible car le gain de volume possible pour le rangement est peu important avec les bouchons. Réciproquement, on pourrait se passer d'installation de broyage dans l'enceinte de rebut 3 qui reçoit les cruchons 6 mal décontaminés, car leur nombre est beaucoup moins important, et ils n'occupent donc que peu de volume.

## Revendications

1. Unité de décontamination de récipients (4) composés par un bouchon (5) et un cruchon (6) contenant du liquide radioactif, comprenant successivement des moyens d'ouverture (18), de vidange , de lavage et de séchage (19, 20, 21) des bouchons (5) et des cruchons (6), ainsi qu'un exutoire (22, 23) des bouchons et cruchons menant à des moyens de mise au rebut (2, 3, 7), caractérisée en ce que lesdits moyens sont des appareils disposés en chaîne et conçus pour traiter un récipient à la fois, et en ce qu'elle comprend un appareil (16) de réception et de régularisation de flux des récipients avant les moyens d'ouverture (18) des récipients, un compteur de contamination résiduelle (24) placé avant les moyens de mise au rebut, un appareil de transfert (17) des récipients entre l'appareil de réception et de régularisation (16) de flux des récipients, les moyens d'ouverture (18), de vidange, de lavage et de séchage (19, 20, 21) des récipients, et l'exutoire (22, 23), et en ce que les moyens de lavage sont composés de moyens de lavage de l'intérieur (20) d'un cruchon (6) du récipient (4), de moyens de lavage de l'extérieur (21) du cruchon dudit récipient et de moyens de lavage (19) de l'intérieur d'un bouchon (5) de fermeture du cruchon (6) du récipient (4).

2. Unité selon la revendication 1, caractérisée en ce que l'exutoire (22, 23) comprend un conduit ascendant (143, 143') devant le compteur (24) de contamination résiduelle.

3. Unité selon l'une quelconque des revendications 1 ou 2, caractérisée en ce que l'exutoire comprend des moyens de broyage (158, 159) précédant les moyens de rebut.

4. Unité selon la revendication 3, caractérisée en ce que les moyens de broyage surplombent des poubelles (7) constituant les moyens de rebut.

5. Unité selon l'une quelconque des revendications 3 ou 4, caractérisée en ce que l'exutoire comprend des moyens de refroidissement (161) des récipients (4) jusqu'à un état fragile avant les moyens de broyage (158, 159).

6. Unité selon la revendication 5, caractérisée en ce que les moyens de refroidissement consistent en des organes de soufflage de gaz originaire d'une bouteille et refroidi par détente.

7. Unité selon l'une quelconque des revendications 1 à 6, caractérisée en ce que l'appareil de réception et de régularisation de flux des récipients est un carrousel (16) occupé par des alvéoles (41) de réception individuelle des récipients.

8. Unité selon l'une quelconque des revendications 1 à 7, caractérisée en ce que l'appareil de transfert est un bras tournant muni d'une extrémité (66, 68) de réception du récipient.

9. Unité selon l'une quelconque des revendications 1 à 8, caractérisée en ce que les moyens de vidange (126, 126') du récipient sont solidaires de certains des moyens de lavage (20) du récipient.

10. Unité selon l'une quelconque des revendications 1 à 9, caractérisée en ce que les moyens de vidange des récipients comprennent des moyens de vidange préliminaire (126) associés à un circuit de recyclage (26) de liquide contaminé et des moyens de vidange finale (126'), utilisés après le lavage et associés à un station d'effluents peu contaminés (27).

11. Unité selon l'une quelconque des revendications 1 à 10, caractérisée en ce que les moyens de séchage consistent en des circuits de soufflage de gaz (112, 116) solidaires des moyens de lavage (19, 20, 21).

12. Unité selon l'une quelconque des revendications 1 à 11, caractérisée en ce que le moyen d'ouverture (18) du récipient (4) est muni de moyens de prise d'un bouchon (5) de fermeture de récipient (4) et surplombe un exutoire (22) spécial pour les bouchons (5).

13. Unité selon l'une quelconque des revendications 1 à 12, caractérisé en ce que l'exutoire comprend un embranchement (145, 145') en aval du compteur de contamination résiduelle.

14. Procédé de décontamination de récipients contenant du liquide radioactif, dans lequel les récipients sont ouverts et vidés, caractérisé en ce que les récipients sont ensuite lavés un à un dans une unité de décontamination, puis séchés et triés en fonction de niveaux de contamination résiduelle, les récipients étant lavés à l'intérieur et à l'extérieur, des bouchons de fermeture des récipients étant également lavés à l'intérieur, et en ce que le flux des récipients est régularisé avant d'ouvrir et de vider les récipients.

15. Procédé de décontamination de récipients selon la revendication 14, caractérisé en ce qu'un broyage des récipients est accompli après lavage des récipients.

16. Procédé de décontamination de récipients selon la revendication 15, caractérisé en ce qu'un séchage des récipients est accompli entre le lavage et le broyage.

## Patentansprüche

1. Arbeitseinheit zur Dekontamination radioaktive Flüssigkeit enthaltender Behälter (4), gebildet durch einen Deckel (5) und einen radioaktive Flüssigkeit enthaltenden Krug (6), nacheinander Einrichtungen zum Öffnen (18), Entleeren, Reinigen und Trocknen (19, 20, 21) der Krüge (6) und der Deckel (5) umfassend sowie Abführungseinrichtungen (22, 23) der Krüge und Deckel, die zu Entsorgungseinrichtungen (2, 3, 7) führen,
**dadurch gekennzeichnet,**
daß die genannten Einrichtungen kettenartig angeordnet und so konzipiert sind, daß ein Behälter auf einmal behandelt wird, und dadurch, daß sie eine Vorrichtung (16) zur Aufnahme und Regulierung des Behälterflusses vor den Öffnungseinrichtungen (18) der Behälter, einen vor den Entsorgungseinrichtungen angeordneten Restkontaminationzähler (24) umfassen und eine Transfervorrichtung (17) der Behälter zwischen der Behälteraufnahme- und -flußregulierungsvorrichtung (16), den Einrichtungen zum Öffnen (18), Entleeren, Reinigen und Trocknen (19, 20, 21) der Behälter und den Abführungseinrichtungen (22, 23), und dadurch, daß die Reinigungseinrichtungen gebildet werden durch Reinigungseinrichtungen der Innenseite (20) eines Krugs (6) des Behälters (4), Reinigungseinrichtungen der Außenseite (21) des Krugs des genannten Behälters und Reinigungseinrichtungen (19) der Innenseite eines Verschlußdeckels (5) des Krugs (6) des Behälters (4).

2. Arbeitseinheit nach Anspruch 1, dadurch gekennzeichnet, daß die Abführungseinrichtungen (22, 23) eine ansteigende Leitung (143, 143') vor dem Restkontaminationszähler (24) umfassen.

3. Arbeitseinheit nach einem der Ansprüche 1 oder 2, dadurch gekennzeichnet, daß die Abführungseinrichtungen Zerkleinerungseinrichtungen (158, 159) umfassen, die sich vor den Entsorgungseinrichtungen befinden.

4. Arbeitseinheit nach Anspruch 3, dadurch gekennzeichnet, daß die Zerkleinerungseinrichtungen sich über Abfallbehältern (7) befinden, die die Entsorgungseinrichtungen bilden.

5. Arbeitseinheit nach einem der Ansprüche 3 oder 4, dadurch gekennzeichnet, daß die Abführungseinrichtungen Kühleinrichtungen (161) umfassen, damit die Behälter (4) bei Erreichen der Zerkleinerungseinrichtungen (158, 159) in einem zerbrechlichen Zustand sind.

6. Arbeitseinheit nach Anspruch 5, dadurch gekennzeichnet, daß die Kühleinrichtungen durch Blasorgane eines Gases gebildet werden, das aus einer Flasche stammt und sich durch Entspannung abkühlt.

7. Arbeitseinheit nach einem der Ansprüche 1 bis 6, dadurch gekennzeichnet, daß die Vorrichtung zur Aufnahme und Regulierung des Behälterflusses ein Karussel bzw. Kreisförderer (16) mit Mulden (41) zur Einzelaufnahme der Behälter ist.

8. Arbeitseinheit nach einem der Ansprüche 1 bis 7, dadurch gekennzeichnet, daß die Transfervorrichtung ein Schwenkarm ist, versehen mit einem Ende (66, 68) zur Behälteraufnahme.

9. Arbeitseinheit nach einem der Ansprüche 1 bis 8, dadurch gekennzeichnet, daß die Entleerungseinrichtungen (126, 126') des Behälters mit einigen der Reinigungseinrichtungen (20) des Behälters verbunden sind.

10. Arbeitseinheit nach einem der Ansprüche 1 bis 9, dadurch gekennzeichnet, daß die Entleerungseinrichtungen der Behälter Vorentleerungseinrichtungen (126) umfassen, verbunden mit einer Recyclingleitung (26) für kontaminierte Flüssigkeit und Endentleerungseinrichtungen (126'), benutzt nach dem Reinigen und verbunden mit einer Station für wenig kontaminierte Abwässer (27).

11. Arbeitseinheit nach einem der Ansprüche 1 bis 10, dadurch gekennzeichnet, daß die Trocknungseinrichtungen durch Gasblasleitungen (112, 116) gebildet werden, verbunden mit den Reinigungseinrichtungen (19, 20, 21).

12. Arbeitseinheit nach einem der Ansprüche 1 bis 11, dadurch gekennzeichnet, daß die Einrichtung (18) zum Öffnen des Behälters (4) mit Einrichtungen zur Abnahme eines Verschlußdeckels (5) des Behälters (4) versehen sind, die sich über Spezialabführungseinrichtungen (22) für die Deckel (5) befinden.

13. Arbeitseinheit nach einem der Ansprüche 1 bis 12, dadurch gekennzeichnet, daß die Abführungseinrichtungen einen dem Restkontaminationszähler nachgeschalteten Zweig (145, 145') umfassen.

14. Verfahren zur Dekontamination von radioaktive Flüssigkeit enthaltenden Behältern, bei dem die Behälter geöffnet und entleert werden, dadurch gekennzeichnet, daß die Behälter anschließend einzeln in einer Dekontaminationseinheit gereinigt, dann getrocknet und in Abhängigkeit von ihrer Restkontamination sortiert werden, wobei die Behälter innen und außen gereinigt werden und die Verschlußdeckel der Behälter ebenfalls innen gereinigt werden, und dadurch, daß der Behälterfluß vor dem Öffnen und Schließen der Behälter reguliert wird.

15. Behälterdekontaminationsverfahren nach Anspruch 14, dadurch gekennzeichnet, daß eine Zerkleinerung der Behälter nach der Reinigung der Behälter erfolgt.

16. Behälterdekontaminationsverfahren nach Anspruch 15, dadurch gekennzeichnet, daß eine Trocknung der Behälter zwischen der Reinigung und der Zerkleinerung erfolgt.

## Claims

1. Unit for the decontamination of containers (4), comprising a plug (5). and a jug (6), containing radioactive liquid, successively comprising means for opening (18), emptying, washing and drying (19, 20, 21) the plugs (5) and jugs (6), as well as an outlet (22, 23) for the plugs and jugs leading to scrapping means (2, 3, 7), characterized in that said apparatuses are arranged in chain form and are designed for treating one container at a time and in that it comprises a container flow regularizing and receiving apparatus (16) upstream of the container opening means (18), a residual contamination counter (24) placed upstream of the scrapping means, a device (17) for the transfer of containers between the container flow regularizing and receiving apparatus (16), the container opening (18), emptying, washing and drying (19, 20, 21) means and the outlet (22, 23) and in that the washing means are constituted by means for washing the interior (20) of a jug (6) of the container (4), means for washing the exterior (21) of the jug of said container and means (19) for washing the interior of a plug (5) for sealing the jug (6) of the container (4).

2. Unit according to claim 1, characterized in that the outlet (22, 23) has a rising pipe (143, 143') in front of the residual contamination counter (24).

3. Unit according to either of the claims 1 or 2, characterized in that the outlet has crushing means (158, 159) preceding the scrapping means.

4. Unit according to claim 3, characterized in that the crushing means overhang waste canisters (7) constituting the scrapping means.

5. Unit according to either of the claims 3 or 4, characterized in that the outlet has means (161) for cooling the containers (4) to a fragile state upstream of the crushing means (158, 159).

6. Unit according to claim 5, characterized in that the cooling means consist of gas blowing members for gas from a cylinder and cooled by expansion.

7. Unit according to any one of the claims 1 to 6, characterized in that the container flow reception and regularizing apparatus is a turntable (16) occupied by individual reception cavities (41) for the containers.

8. Unit according to any one of the claims 1 to 7, characterized in that the transfer apparatus is a rotary arm provided with a container reception end (66, 68).

9. Unit according to any one of the claims 1 to 8, characterized in that the container emptying means (126, 126') are integral with certain of the container washing means (20).

10. Unit according to any one of the claims 1 to 9, characterized in that the container emptying means comprise preliminary emptying means (126) associated with a contaminated liquid recycling circuit (26) and final emptying means (126') used after washing and associated with a slightly contaminated effluent station (27).

11. Unit according to any one of the claims 1 to 10, characterized in that the drying means are constituted by gas blowing circuits (112, 116) integral with the washing means (19, 20, 21).

12. Unit according to any one of the claims 1 to 11, characterized in that the opening means (18) for the container (4) is provided with means for receiving the sealing plug (5) of the container (4) and overhanging a special outlet (22) for the plugs (5).

13. Unit according to any one of the claims 1 to 12, characterized in that the outlet has a branch (145, 145') downstream of the residual contamination counter.

14. Process for the decontamination of containers containing radioactive liquid, in which the containers are opened and emptied, characterized in that the containers are then washed one by one in a decontamination unit and then dried and sorted as a function of the residual contamination levels, the containers being washed inside and outside, the container sealing plugs also being washed inside and in that the flow of containers is regularized prior to the opening and emptying of the containers.

15. Process for the decontamination of containers according to claim 14, characterized in that the containers are crushed after washing.

16. Process for the decontamination of containers according to claim 15, characterized in that the containers are dried between washing and crushing.
